# EUROPÄISCHE PATENTSCHRIFT

(11) **EP 4 594 925 B1**
(45) Veröffentlichungstag und Bekanntmachung des Hinweises auf die Patenterteilung: **22.07.2026**
(21) Anmeldenummer: 23792875.9
(22) Anmeldetag: 13.09.2023
(51) Int. Cl.: G06K 19/07

(54) **STABILISIERUNG DER KONTAKTLOSEN ENERGIEVERSORGUNG DES CHIPS EINER CHIPKARTE SOWIE ENTSPRECHENDE CHIPKARTE**
STABILISING THE CONTACTLESS POWER SUPPLY OF THE CHIP OF A CHIP CARD AND CORRESPONDING CHIP CARD
STABILISATION DE L'ALIMENTATION SANS CONTACT DE LA PUCE D'UNE CARTE À PUCE ET CARTE À PUCE CORRESPONDANTE

(30) Priorität: 26.09.2022 DE 102022003525
(43) Veröffentlichungstag der Anmeldung: 06.08.2025
(73) Patentinhaber: Giesecke+Devrient ePayments GmbH, 81677 München (DE)
(72) Erfinder: BALDISCHWEILER, Michael, 81825 München (DE); WÜRSTLE, Paul, 81547 München (DE)
(74) Vertreter: Giesecke+Devrient IP
(86) Internationale Anmeldenummer: PCT/DE2023/100680
(87) Internationale Veröffentlichungsnummer: WO 2024/067912

(56) Entgegenhaltungen:
- EP-A1- 3 979 134
- EP-B1- 1 474 776
- US-B2- 11 307 635

## Beschreibung

Die Erfindung betrifft ein Verfahren zum Einstellen der internen Versorgungsspannung des Chips einer Chipkarte basierend auf der Feldstärke eines den Chip mit Energie versorgenden externen elektromagnetischen Felds, ein entsprechendes Computerprogrammprodukt, ein Speichermedium mit dem Computerprogrammprodukt, ein Verfahren zum Einrichten des Chips der Chipkarte mit dem Speichermedium zur Durchführung des Verfahrens zum Einstellen der internen Versorgungsspannung des Chips sowie eine Chipkarte mit dem Chip, in dem das Verfahren zum Einstellen der internen Versorgungsspannung des Chips implementiert ist.

Chipkarten, auch Smartcard oder Integrated Circuit Card (ICC) genannt, sind kartenförmige Datenträger, die in vielen Bereichen, insbesondere in sicherheitskritischen Anwendungen, eingesetzt werden, z.B. in Zahlungsverfahren zur Durchführung von Transaktionen des bargeldlosen Zahlungsverkehrs, zur fälschungssicheren Identitätsfeststellung von Personen, z. B. als Ausweisdokumente, oder als Berechtigungsnachweise, z.B. zum Nachweis von Zugangsberechtigungen, um nur einige nicht abschließende Beispiele zu nennen. Beispielsweise definiert die ISO/IEC 7810 als internationale Norm vier Formate für Identitätsdokumente - ID-1, ID-2, ID-3 und ID-000 -, wobei ID-1 das bekannte Bankkarten-, Kreditkarten- und Scheckkartenformat betrifft.

Eine Chipkarte weist einen Kartenkörper und einen in den Kartenkörper eingebetteten integrierten Schaltkreis (Chip), z.B. in Form eines Chipmoduls, auf. Das Chipmodul ist üblicherweise in eine Kavität oder Modulöffnung des Kartenkörpers eingesetzt. Physikalisch ist eine Chipkarte also eine Karte mit einem darin eingebautem Chip, der wenigstens eine Hardware-Logik, aber üblicherweise einen Mikroprozessor (oder Mikrocontroller), sowie nichtflüchtige Speicher (Elektrisch-Löschbares-programmierbares ROM, EPROM oder Elektrisch-änderbares-programmierbares ROM, EAPROM) enthält. Chipkarten können mit hierfür eingerichteten Kartenlesegeräten angesteuert werden und mit diesen kommunizieren.

Im Folgenden werden Chipkarten oder Chipmodule betrachtet, in die eine Spule integriert ist, die für eine berührungs- oder kontaktlose Kommunikation über ein externes elektromagnetisches Feld eingerichtet sind und von diesem Feld mit der für ihren Betrieb benötigten Energie versorgt werden; als Beispiel sei hier ein Chipkartencontroller mit der Funktionalität "Identifizierung mit Hilfe elektromagnetischer Wellen"(RFID) genannt. Eine hier betrachtete Chipkarte kann auch eine Karte mit Dual Interface (DI) Funktionalität sein, d.h. gleichfalls mechanisch-elektrische Kontakte für eine kontaktbehaftete Kommunikation mit einem zugehörigen Lesegerät aufweisen. Für weiterführende Informationen sei hier z.B. auf die internationale Normenreihe ISO/IEC 14443 für kontaktlose Chipkarten verwiesen. Die ISO/IEC 14443 bezeichnet eine Leseeinheit als PCD (proximity coupling device) und die Chipkarte als PICC (proximity integrated circuit card), wobei der zulässige Leseabstand in größter Nähe für verlässliches Lesen wenige Zentimeter bis zum direkten Auflegen beträgt.

Es gibt Chipkarten, bei denen das Powermanagement im kontaktlosen Modus, auch CL-Modus (CL = ContactLess) genannt, selbst per Software durchgeführt werden muss. Dazu weist der Chip Sensorregister, in welche die mittels eines Sensors erfasste, aktuelle Feldstärke des externen elektromagnetischen Lesefelds als absoluter oder relativer Wert abgelegt ist, Shunt-Register, deren Bits zusätzliche Lastwiderstände im/zum Chip hinzu- oder abschalten, und Versorgungsspannungsregister auf, die es ermöglichen die interne Versorgungsspannung im Chip zu verändern. Da bei ist ein Register im Wesentlichen ein Speicherbereich für Daten, auf den die Hardware-Logik oder der Mikroprozessor (oder Mikrocontroller) des Chips besonders schnell zugreifen kann, wobei das Register im Wesentlichen eine Spreicherstelle mit einer physikalischen oder logischen Speicheradresse ist. Damit besteht die Möglichkeit, Eingriffe hinsichtlich des Leistungsverbrauchs im CL-Modus per Software durchzuführen. Dies ist notwendig, da der Chip im Kontaktlosmodus alle Energie aufnimmt, die er von einem kontaktlosen Lesegerät PCD bekommt. Ist der Chip "gesättigt", d.h. der Chip kann die zugeführte Energie nicht vollständig in Rechenleistung umsetzen, werden zusätzliche ohmsche Widerstände (Shunts) aktiviert, um die überschüssige Energie in Wärme umzusetzen und so den Chip vor Beschädigung zu schützen.

Damit umgekehrt der Chip bereits in einem schwachen elektromagnetischen Feld arbeiten kann, ist es möglich per Software die interne Schwellenspannung im Chip, das ist die Höhe der internen Versorgungsspannung, ab welcher der Chip zu arbeiten beginnt, herabzusetzen. Dann arbeitet der Chip intern mit einer verringerten Versorgungsspannung; beispielsweise nicht mehr mit 1 V, sondern bereits mit 0,85 V, d.h. die Herabsetzung beträgt hier 0,15 V.

Die interne Versorgungsspannung des Chips darf jedoch nur im Schwachfeld heruntergesetzt werden. Bei Feldstärken über einem bestimmten Wert, z.B. 1,5 A/m, muss die Versorgungsspannung wieder auf den Normalwert gesetzt werden, d.h. die Herabsetzung muss deaktiviert werden, da es sonst zu Beschädigungen im Chip kommen kann. Der Umschaltpunkt oder genauer die Schaltschwelle ist kritisch. Falls die Deaktivierung der Herabsetzung der Versorgungsspannung bei zu geringer äußerer Feldstärke erfolgt, kann der Chip durch eine zu hohe interne Leistungsaufnahme "abgewürgt" werden, d.h. ausfallen; durch das Umschalten auf die normale Versorgungsspannung benötigt der Chip nämlich sofort mehr Energie, da beispielsweise die Transistoren bei der höheren Versorgungsspannung mehr Energie aufnehmen.

Andererseits kann es bei einem nicht rechtzeitigen Umschalten auf die normale Versorgungsspannung zu einer zu hohen Leistungsaufnahme aufgrund der hohen Feldstärke des externen elektromagnetischen Felds und zu einer Beschädigung des Chips kommen.

Die Regelung der internen Versorgungsspannung wird zusätzlich erschwert, dadurch, dass die Änderungen in der Feldstärke des externen Felds nicht gut vorhersehbar sind. So wird die Chipkarte von einem Menschen in das Leserfeld gehalten, was alleine bereits Schwankungen im CL-Feld bedingt, besonders weil eine Transaktion bis zu 1 Sekunde dauern kann. Zusätzlichen Einfluss hat das Verfahren, wenn beispielsweise eine Transaktion an einem Point of Sale (POS)-Terminal als PCD durchgeführt wird. In einem ersten Schritt wird zuerst das POS-Terminal aktiviert. In einem zweiten Schritt führt der Kunde die Chipkarte mit der Hand zum POS-Terminal. In dem Zeitraum, bis die Karte an ihrer Endposition am POS-Terminal angekommen ist, verändert sich das CL-Feld, dass am Ort der Chipkarte wirkt, ständig. Zusätzlich kann auch das POS-Terminal selbst seitens des Verkäufers mit der Hand auf die Chipkarte zubewegt werden.

Alle vorstehend genannten relevanten Umstände für die Einstellung der internen Versorgungsspannung des Chips zusammen mit den Schwankungen der Feldstärke des externen elektromagnetischen Felds während des oben genannten typischen Ablaufs eines Bezahlvorgangs scheinen ursächlich für Transaktionsabbrüche an POS-Terminals.

Verfahren zum Einstellen der internen Versorgungsspannung des Chips sind beispielhaft aus US 11 307 635 B2 oder EP 1474 776 B1 bekannt.

Aufgabe der vorliegenden Erfindung ist es daher, ein Verfahren vorzuschlagen, eine möglichst stabile Energieversorgung des Chips einer Chipkarte mit einstellbarer interner Versorgungsspannung in Abhängigkeit der Feldstärke des den Chip mit Energie versorgenden externen elektromagnetischen Feldes sicherzustellen.

Diese Aufgabe wird durch die unabhängigen Patentansprüche gelöst. Ausgestaltungen und Weiterbildungen der Erfindung sind in den abhängigen Ansprüchen angegeben. Dabei gelten Merkmale und Details, die im Zusammenhang mit dem erfindungsgemäßen Verfahren beschrieben sind, auch im Zusammenhang mit der erfindungsgemäßen Chipkarte, dem Computerprogramm und dem Speichermedium und jeweils umgekehrt, sodass bezüglich der Offenbarung zu den einzelnen Erfindungsaspekten stets wechselseitig Bezug genommen werden kann.

Ein Grundgedanke der vorliegenden Erfindung besteht darin, vermittels eines Software-gesteuerten Regelkreises die interne Versorgungsspannung des Chips der Chipkarte so zu steuern, dass die Energieversorgung des Chips bei Schwankungen der von der Chipkarte "gesehenen" externen Feldstärke möglichst stabil bleibt.

Für die Auslegung der hier vorgeschlagenen Software-gesteuerten Regelung der internen Versorgungsspannung im Wege der Aktivierung oder Deaktivierung einer Herabsetzung der internen Versorgungsspannung, mit welcher der Chip arbeitet, waren mehrere technische Überlegungen und Erkenntnis notwendig, die nachstehend erläutert werden.

Wie eingangs beschrieben, kann bei den hier betrachteten Chipkarten per Software die Spannungsschwelle, ab welcher der Chip zu arbeiten beginnt, heruntergesetzt werden, sodass der Chip bereits in einem schwachen elektromagnetischen Feld eingesetzt werden kann. Im Effekt arbeitet der Chip dabei intern mit einer verringerten Versorgungspannung. Die Aktivierung der Herabsetzung der internen Versorgungsspannung, d.h. die Herabsetzung der Schwellenspannung, sollte nur im Schwachfeld erfolgen, damit es nicht zu einer Beschädigung des Chips bei höheren externen Feldstärken kommt. D.h., bei einer externen Feldstärke über einem bestimmten Wert sollte die Herabsetzung der Schwellenspannung wieder deaktiviert werden und somit die interne Versorgungsspannung wieder auf den Normalwert gesetzt werden.

Die Erfinder haben jedoch festgestellt, dass das Herabsetzen der internen Versorgungsspannung ebenfalls alle Sensoren des Chips beeinflusst, somit auch das Sensorregister, das die aktuelle externe elektromagnetische Feldstärke anzeigt. Dies sei kurz mit einem Beispiel verdeutlicht.

Angenommen, die interne Versorgungsspannung des Chips ist nicht heruntergesetzt, d.h. die Herabsetzung der Schwellenspannung ist nicht aktiv, und es liegt eine externe Feldstärke von 1 A/m vor. Das Sensorregister zeigt dann z.B. einen Wert von "0x03" an. Wenn nun die Herabsetzung der Schwellenspannung aktiviert wird, also die interne Versorgungsspannung verringert wird, wird bei derselben externen Feldstärke von 1 A/m, vom Sensorregister der Wert "0x07" angezeigt. Die Heruntersetzung der Schwellenspannung führte also dazu, dass das Sensorregister dem Chip eine höhere äußere Feldstärke anzeigt als diejenige, die tatsächlich vorliegt. Wie oben angemerkt, darf die Schwellenspannung nur in einem schwachen elektromagnetischen Feld heruntergesetzt werden. Bei Feldstärken über einem bestimmten Wert, angenommen z.B. 1,5 A/m, muss die Schwellenspannung wieder hochgesetzt werden, d.h. die Herabsetzung deaktiviert und die interne Versorgungsspannung wieder auf den Normalwert gesetzt werden, da es sonst zu Beschädigungen im/am Chip kommen kann. Die Schaltschwelle hierfür ist kritisch, da, sollte die Deaktivierung der Herabsetzung der Schwellenspannung bei einer zu geringen äußeren Feldstärke - also zu früh - erfolgen, wird der Chip durch seine dann zu hohe interne Leistungsaufnahme "abgewürgt", da der Chip bei der normalen internen Versorgungsspannung mehr Energie umsetzt. Erfolgt die Deaktivierung der Herabsetzung der Schwellenspannung zu spät, kann der Chip aufgrund einer zu hohen Leistungsaufnahme beschädigt werden.

Zusätzlich erschwert wird die Software-gestützte Regelung der internen Versorgungsspannung über die Aktivierung/Deaktivierung der Herabsetzung der Schwellenspannung, da die Schwankungen der Feldstärke des den Chip mit Energie versorgenden externen elektromagnetischen Felds von verschiedenen Faktoren abhängt und somit kaum vorhersagbar ist. Bereits die Tatsache, dass die Chipkarte von einem Menschen durch das Leserfeld in Richtung des POS-Terminals geführt wird und eine Transaktion bis zu 1 Sekunde dauern kann, ist bereits ursächlich für Schwankungen der Feldstärk des externen CL-Felds. Auch ist es nicht unüblich, dass an einem POS der Verkäufer das POS-Terminal ebenfalls als in der Hand gehaltenes Gerät auf die Chipkarte des Kunden zubewegt und sich damit sowohl die Chipkarte als auch das POS-Terminal während der Transaktion in Bewegung befinden. Schließlich führt der Ablauf der kontaktlosen Zahltransaktion an einem POS-Terminal zwangsläufig zu einer Schwankung der Feldstärke des CL-Felds. Üblicherweise wird in einem ersten Schritt zuerst das POS-Terminal aktiviert und dann führt der Kunde in einem zweiten Schritt die Chipkarte zum POS-Terminal und der Verkäufer gegebenenfalls das POS-Terminal auf die Chipkarte zu. In dem Zeitraum, bis die Karte an ihrer Endposition am POS-Terminal angekommen ist, verändert sich mit dem sich ändernden Abstand zwischen der Chipkarte und dem POS-Terminal das CL-Feld, dass die Chipkarte selbst sieht.

Alle die genannten technischen Zusammenhänge und Abläufe müssen berücksichtigt werden, damit es aufgrund von zu starken Schwankungen der internen Versorgungsspannung des Chips möglichst nicht zu Transaktionsabbrüchen während einer Transaktion am POS-Terminal kommt.

Ein erster Aspekt der Erfindung betrifft ein Verfahren zum Einstellen der internen Versorgungsspannung des Chips einer Chipkarte basierend auf der Feldstärke eines den Chip mit Energie versorgenden externen elektromagnetischen Felds, wobei das Verfahren von dem Chip implementiert wird. Die interne Versorgungsspannung des Chips ist durch Aktivieren und Deaktivieren einer Herabsetzung einer Schwellenspannung verringerbar und erhöhbar. Der Chip weist ein Sensorregister auf, das einen Feldstärkewert anzeigt, der abhängig von der Feldstärke des externen elektromagnetischen Felds und der eingestellten internen Versorgungsspannung ist. Das Verfahren weist die folgenden Schritte auf:
- einen Schritt A, mit erstmaligem Aktivieren der Herabsetzung Schwellenspannung, wenn der Feldstärkewert im Sensorregister kleiner als eine vorbestimmte erste Schaltschwelle ist;
- einen Schritt B, mit erstmaligem Deaktivieren der Herabsetzung der Schwellenspannung, sobald der Feldstärkewert im Sensorregister größer oder gleich der ersten Schaltschwelle ist; und
- einen Schritt C, mit Setzen einer vorbestimmten zweiten Schaltschwelle für jedes erneute Aktivieren der Herabsetzung der Schwellenspannung unter Beibehaltung der ersten Schaltschwelle für jedes erneute Deaktivieren der Herabsetzung der Schwellenspannung, wobei die zweite Schaltschwelle niedriger als die erste Schaltschwelle ist.

Zum Aktivieren und Deaktivieren der Herabsetzung der Schwellenspannung für die Veränderung der internen Versorgungsspannung des Chips kann ein Schwellwertregister vorgesehen sein, das zum Aktivieren und Deaktivieren der Herabsetzung der Schwellenspannung beschreibbar ist. Beispielsweise kann die Aktivierung oder Deaktivierung einem bestimmten Bit in einer Speicherstelle in einem Arbeitsspeicher des Mikroprozessors oder Mikrocontrollers des Chips zugeordnet sein, wobei über das Bit eine interne Versorgungsspannungseinheit des Chips entsprechend angesteuert wird.

Es versteht sich, dass der in dem Sensorregister des Chips angezeigte Feldstärkewert, von der externen Feldstärke des externen elektromagnetischen Felds sich auf den Feldstärkewert am Ort der Chipkarte bezieht; üblicherweise besitzt die Chipkarte zum Koppeln mit dem externen elektromagnetischen Feld entsprechende als eine oder mehrere Antennen fungierende Bauteile, wie beispielsweise eine in den Kartenkörper der Chipkarte und/oder in ein Chipmodul des Chips integrierte Spule.

Typische elektromagnetische Feldstärken für eine Kommunikation zwischen dem Chip der Chipkarte und einem kontaktlosen Lesegerät (PCD oder CL-Reader) liegen zum Beispiel in einem Bereich zwischen 1,5 A/ m und 7,5 A/m.

Der Chip kann als integrierte Schaltung zum Beispiel einen Mikrocontroller oder Mikroprozessor aufweisen; grundsätzlich könnte die integrierte Schaltung auch als reine Hardware-Logik alle notwendigen Funktionen implementieren und beispielsweise eine anwendungsspezifische integrierte Schaltung (ASIC) oder auch als Field Programmable Gate Array (FPGA) realisiert sein.

Um eine möglichst gute Regelung der internen Versorgungsspannung des Chips sicherzustellen, sollten die Sensorregisterwerte in hinreichend kurzen zeitlichen Abständen ausgewertet werden. Darauf basierend ist die Schwellenspannung einzustellen und gegebenenfalls Shunt-Widerstände zum Verbrauch gegebenenfalls überschüssiger Leistung im Chip zu oder wegzuschalten. Die Erfinder schlagen aufgrund folgender technischen Überlegungen vor, die Taktung der Auswertung der Sensorregisterwerte wie folgt auszulegen.

Ab etwa 5 cm Abstand der Chipkarte von der Centerposition des PCD oder POS-Terminals, beginnt eine Chipkarte üblicherweise zu arbeiten. Bei 3 cm Abstand von der Centerposition überschreitet bei den meisten POS-Terminals die am Ort der Chipkarte herrschende Feldstärke 2 A/m. Die maximale Bewegungsgeschwindigkeit für die Annäherung der Chipkarte an das POS-Terminal liegt bei etwa 0,59 m/s für einen Arm des Verwenders der Karte; diese Bewegungsgeschwindigkeit gilt nur für lineare Bewegungen, also ohne Stopp. D.h., die Regelung ist in einem Bereich von 2 cm für einen Feldstärkebereich von 0 A/m nach 2 A/m auszulegen. Damit ergibt sich ein Zeitfenster von kleiner 200 ms, in dem eine ausreichend genaue Regelung durchgeführt werden muss. Um diese Regelung sicher zu stellen, sollte die Auswertung des Sensorregisters spätestens alle 35 ms durchgeführt werden.

Der Feldstärkewert in dem Sensorregister des Chips der Chipkarte kann intermittierend, bevorzugt in einem zeitlichen Abstand von 30 bis 40 ms, besonders bevorzugt etwa alle 35 ms, ausgewertet werden. Darauf basierend werden die oben genannten Schritte A bis C ausgeführt, d.h. die Schwellenspannung bestimmungsgemäß oder bedarfsgerecht aktiviert oder deaktiviert.

Eine besonders effiziente Umsetzung besteht darin, den S(WTX)- oder SWTX-Befehl (Frame Wait Time Extension Request) des T=CL Protokolls gemäß ISO/IEC 7816-4 als Trigger für eine kontinuierliche Auswertung des Sensorregisters zu verwenden. Der SWTX-Befehl ist eine Anforderung von mehr Zeit für die Verarbeitung eines Befehls, also eine Verlängerung einer vorbestimmten Wartezeit, um einen Abbruch der Kommunikation zu verhindern. Dadurch können weitere Interrupts bzw. kontinuierliche Überprüfungen des Sensorregisters entfallen.

Vorzugsweise erfolgt die Überprüfung des Sensorregisters vor dem Aussenden des S(WTX)-Request. Dies hat den Vorteil, dass das Verhalten der Lastmodulation in Abhängigkeit der Feldstärke angepasst werden kann. D.h., in einer bevorzugten Weiterbildung erfolgt die Auswertung des Sensorregisters vor dem Aussenden des S(WTX)-Request.

Der Chip besitzt bevorzugt zuschaltbare interne oder externe Shunt-Widerstände, die abhängig von der aktuellen Leistungsaufnahme des Chips und der externen Feldstärke zur Abfuhr überschüssiger Energie zum Chip zugeschaltet oder vom Chip getrennt werden können. Das Zuschalten oder Wegschalten der Shunt-Widerstände zu dem Chip kann über ein entsprechendes Shunt-Register gesteuert werden, dessen Bits jeweils einem bestimmten Shunt-Widerstand zugeordnet sind und beispielsweise ein gesetztes Bit ("1") den zugehörigen Shunt-Widerstand mit dem Chip so verschaltet, dass ein Teil der aktuell überschüssigen Energie im Shunt-Widerstand in Wärme umgesetzt wird.

Erfindungsgemäß ist das vorstehende Verfahren als Software-Regelung in der Hardware-Logik, beispielsweise einem Mikrocontroller oder Mikroprozessor oder einem ASIC oder FPGA, im Chip der Chipkarte implementiert.

Ein zweiter Aspekt der Erfindung betrifft ein Computerprogramm(produkt), umfassend Befehle, die bei der Ausführung des Programms durch einen Computer, insbesondere einen Mikrocontroller oder Mikroprozessor in einem Chip einer Chipkarte, diesen veranlassen, die Schritte des Verfahrens gemäß dem ersten Aspekt der Erfindung auszuführen.

Ein dritter Aspekt der Erfindung betrifft ein (computerlesbares) Speichermedium, insbesondere in Form eines Programmspeicherbereichs eines Chips einer Chipkarte, in dem Befehle gespeichert sind, die bei der Ausführung durch einen Computer, insbesondere einen Mikrocontroller oder Mikroprozessor in einem Chip einer Chipkarte, diesen veranlassen, die Schritte des Verfahrens gemäß dem ersten Aspekt der Erfindung auszuführen.

Ein vierter Aspekt der Erfindung betrifft ein Verfahren zum Einrichten des Chips einer Chipkarte mit einem computerlesbaren Speichermedium gemäß dem dritten Aspekt der Erfindung. Die interne Versorgungsspannung des Chips ist basierend auf der Feldstärke eines den Chip mit Energie versorgenden externen elektromagnetischen Felds durch Aktivieren und Deaktivieren einer Herabsetzung der Schwellenspannung einer internen Versorgungsspannung des Chips, insbesondere in einem Schwellwertregister, verringerbar und wieder erhöhbar. Der Chip weist ein Sensorregister auf, das einen Feldstärkewert anzeigt, der abhängig ist von der externen Feldstärke des externen elektromagnetischen Felds und davon, ob die Herabsetzung der Schwellenspannung aktiviert oder deaktiviert ist. Das Verfahren weist die folgenden Schritte auf:
- einen Schritt a, mit Bestimmen der Feldstärkewerte in dem Sensorregister in Abhängigkeit von der externen Feldstärke, wenn die Herabsetzung der Schwellenspannung deaktiviert ist, somit die interne Versorgungsspannung nicht verringert ist, über einen Feldstärkenbereich;
- einen Schritt b, mit Bestimmen der Feldstärkewerte in dem Sensorregister in Abhängigkeit von der externen Feldstärke, wenn die Herabsetzung der Schwellenspannung aktiviert ist, somit die interne Versorgungsspannung verringert ist, über den Feldstärkenbereich;
- einen Schritt c, mit Vorbestimmen einer ersten Schaltschwelle, bei deren Unterschreitung die Herabsetzung der Schwellenspannung erstmalig aktiviert wird und bei deren nachfolgenden Überschreitung die Herabsetzung der Schwellenspannung erstmalig wieder deaktiviert wird;
- einen Schritt d, mit Vorbestimmen einer zweiten Schaltschwelle, bei deren Unterschreitung die Herabsetzung der Schwellenspannung erneut aktiviert werden soll, wobei die zweite Schaltschwelle niedriger als die erste Schaltschwelle ist; und
- einen Schritt e, mit Abspeichern der ersten Schaltschwelle und der zweiten Schaltschwelle in dem Speichermedium des Chips.

Der Feldstärkenbereich kann von 0 A/m bis 10 A/m und bevorzugt von 0,5 A/m bis 7,5 A/m definiert sein.

In dem Schritt d können Schwankungen aufgrund des Produktionsprozesses der Chipkarte und/oder einer Spule, die mit dem Chip verschaltet ist, und/oder aufgrund der Verbindungstechnologie, mit der die Spule mit dem Chip verbunden ist, berücksichtigt werden.

Beispielsweise kann die erste Schaltschwelle 2 A/m sein. Es wurde festgestellt, dass bei Schwankungen im Produktionsprozess der Chipkarten sich der zugehörige Wert im Sensorregister in einem Bereich von +/- 0, 1 A/m verschieben kann. Zu diesem Bereich kommen noch Schwankungen hinzu, die durch die Spule als auch durch die verwendete Verbindungstechnologie, mit der die Spule mit dem Chip elektrisch verschaltet ist, resultieren. Bei Löten als Verbindungstechnologie sind diese Werte sehr klein, bei einer Flexbump-Technologie können diese Werte größer sein, z.B. +/- 0,4 A/m.

Ein fünfter Aspekt der Erfindung betrifft eine Chipkarte mit einem Chip dessen Versorgungsspannung durch Aktivieren und Deaktivieren einer Herabsetzung einer Schwellenspannung der internen Versorgungsspannung des Chips verringerbar ist. Dazu weist der Chip auf:
- ein Sensorregister, das einen Feldstärkewert anzeigt, der abhängig von einer externen Feldstärke eines externen elektromagnetischen Felds und der eingestellten internen Versorgungsspannung ist;
- ein Speichermedium, indem eine erste Schaltschwelle und eine zweite Schaltschwelle abgespeichert sind, wobei die zweite Schaltschwelle niedriger als die erste Schaltschwelle ist; und
- den Chip, der eingerichtet ist, ein Verfahren gemäß dem ersten Aspekt der Erfindung auszuführen.

Die Chipkarte kann einen Speicherbereich aufweisen, in dem Wertepaare aufweisend einen Feldstärkewert in dem Sensorregister und die zugehörige externe Feldstärke, wenn die Herabsetzung der Schwellenspannung deaktiviert ist, somit die interne Versorgungsspannung nicht verringert ist, und Wertepaare aufweisend den Feldstärkewert in dem Sensorregister und die zugehörige externe Feldstärke, wenn die Herabsetzung der Schwellenspannung aktiviert ist, somit die interne Versorgungsspannung verringert ist, abgelegt sind.

Bevorzugt sind die jeweiligen Wertepaare bei aktivierter Herabsetzung der Schwellenspannung und bei deaktivierter Herabsetzung der Schwellenspannung aufweisend den Feldstärkewert in dem Sensorregister und die zugehörige externe Feldstärke über den o.g. Feldstärkenbereich von 0 A/m bis 10 A/m und bevorzugt von 0,5 A/m bis 7,5 A/m in dem Speicherbereich abgelegt.

Mit den vorstehend vorgeschlagenen Verfahren kann eine gattungsgemäße Chipkarte bereitgestellt werden, bei der eine verbesserte Stabilität der Energieversorgung des Chips auf der Chipkarte erreicht wird. Diese zeigt sich daran, dass der Chip weniger, bis gar nicht mehr intern "abgewürgt" wird, d.h. aufgrund von Unterspannung zu wenig Energie hat, oder, indem der Chip nicht durch Überhitzung zerstört oder beschädigt wird. Somit wird die Wahrscheinlichkeit deutlich erhöht, dass trotz oder bei schwankender externer Feldstärke eine komplette Transaktion mit einer Chipkarte mit dem erfindungsgemäßen Chip durchgeführt werden kann.

Die Erfindung wird nachfolgend mit Bezug auf die beiliegenden Zeichnungen beispielhaft beschrieben. Darin zeigen
- Fig. 1: eine vereinfachte schematische Explosionsdarstellung einer Dual Interface (DI) Chipkarte;
- Fig. 2: ein vereinfachtes funktionales Blockschaltbild eines Chipmoduls der Chipkarte der Fig. 1;
- Fig. 3: eine vereinfachte Darstellung einer Chipkarte im Kontaktlosmodus, die beispielsweise für einen Bezahlvorgang an ein POS-Terminal herangeführt wird, wobei das POS-Terminal ein elektromagnetisches Feld zur Versorgung der Chipkarte mit Energie sowie zur Kommunikation mit der Chipkarte erzeugt;
- Fig. 4: ein Flussdiagramm eines erfindungsgemäßen Verfahrens zum Einrichten des Chips einer Chipkarte für die Anwendung des erfindungsgemäßen Software-implementierten Regelungsverfahrens gemäß Fig. 6;
- Fig. 5: eine beispielhafte Darstellung des mit dem Verfahren der Fig. 4 ermittelten Zusammenhangs zwischen den externen Feldstärken im Sensorregister des Chips einer Chipkarte für den Fall mit aktivierter Herabsetzung und den Fall mit deaktivierter Herabsetzung der Schwellenspannung;
- Fig. 6: ein Flussdiagramm eines erfindungsgemäßen Verfahrens zum Einstellen der internen Versorgungsspannung des Chips einer Chipkarte basierend auf der Feldstärke eines den Chip mit Energie versorgenden externen elektromagnetischen Felds zur Umsetzung des erfindungsgemäßen Software-implementierten Regelungsverfahrens; und
- Fig. 7: eine Veranschaulichung des Regelungsverfahrens für die Aktivierung und Deaktivierung der Herabsetzung der Schwellenspannung anhand der Zusammenhänge zwischen der im Sensorregister angezeigten Feldstärke jeweils bei aktivierter Herabsetzung und deaktivierter Herabsetzung der Schwellenspannung.

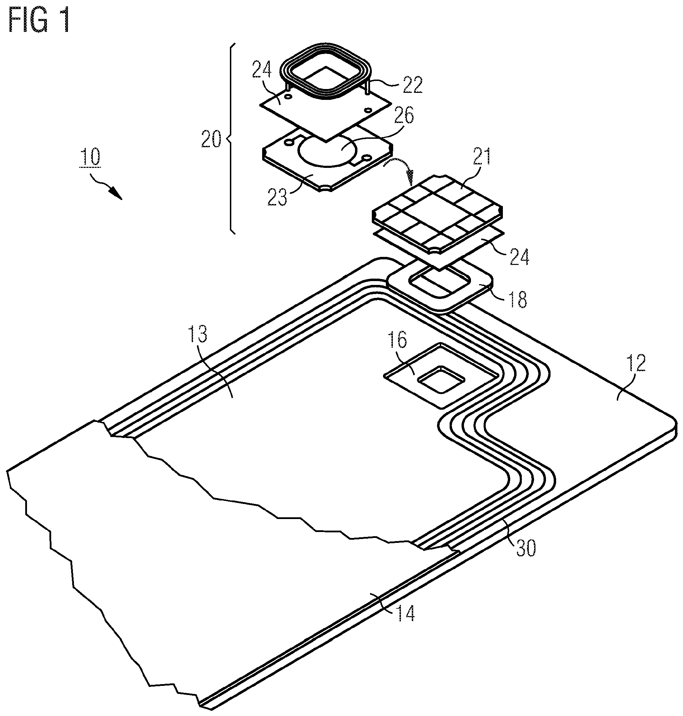

Fig. 1 zeigt beispielshaft den prinzipiellen Aufbau einer Dual-Interface Chipkarte 10. Die Beispielfigur stammtaus: M. Roland and M. Hölzl: "Evaluation of Contactless Smartcard Antennas", Technical Report, Computing Research Repository (CoRR), ar-Xiv:1507.06427 [cs.CR], Seite 17, University of Applied Sciences Upper Austria, JR-Center u'smile, Juli 2015.

Fig. 1 zeigt die Chipkarte 10 mit einem Kartenkörper 12. Der Kartenkörper 12 kann eine metallische Schicht 13 umfassen, deren Hauptflächen jeweils mit einer Kunststoffschicht 14 bedeckt sein können. Die metallische Schicht 13 kann zum Beispiel in Form des Kerns oder einer Schicht aus einer Edelstahllegierung beispielsweise mit einer Dicke von 400 µm vorliegen. Die Dicke des Kartenkörpers 12 kann zum Beispiel zwischen 50 µm und 920 µm betragen.

Die Chipkarte 10 umfasst des Weiteren ein Chipmodul 20, das in eine Ausnehmung 16 in der Hauptfläche des Kartenkörpers 12 oder der Chipkarte 10 eingesetzt ist. Die Ausnehmung 16 kann eine Modulöffnung oder Kavität sein und ein mittiges Sackloch und einen umlaufenden Randbereich umfassen. Das Chipmodul 20 kann in der Kavität mittels einer Klebeschicht oder einem Klebepad 18 verklebt sein.

In der metallischen Schicht 13 kann ein (in der Fig. 1 nicht gezeigter) Schlitz vorgesehen sein, der sich von einer Umfangsfläche oder einer Außenkante des Kartenkörpers 12 zu der Kavität zur Vermeidung von Wirbelströmen in der metallischen Schicht 13 erstreckt.

Das Chipmodul 20 ist auf einem sogenannten Modultape 23 angeordnet und kann mit einer Spule 30, die ebenfalls in den Kartenkörper 12 integriert ist, verbunden sein, und/oder selbst eine Spule 22 aufweisen, wobei zwischen einem Chip 26 und der Spule 22 eine Metallschicht oder Ferritschicht 24 angeordnet ist. Die Spule 30 verläuft mit etwa 3 bis 6 Windungen in der Kartenebene um das Chipmodul 20. Die Spule 22 verläuft mit etwa 12 bis 16 Windungen in der Ebene des Chipmoduls 20 konzentrisch um den Chip 26 des Chipmoduls 20.

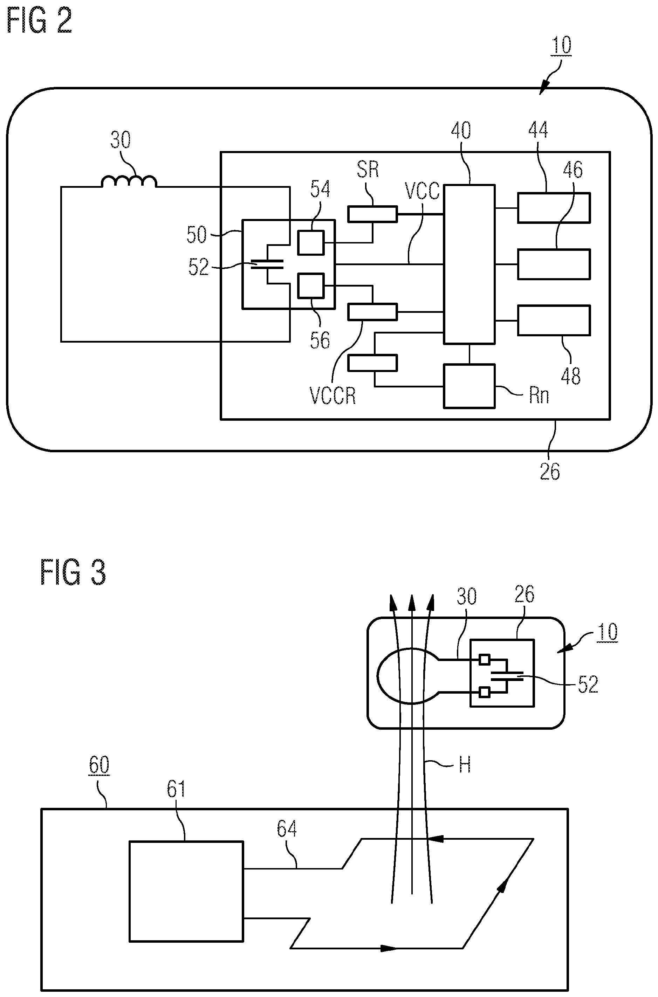

Der Chip 26 des Chipmoduls 20 kann zum Beispiel in Form eines elektronischen integrierten Schaltkreises oder Schaltung realisiert und zum Beispiel vergossen in einer Vergussmasse an einer Unterseite des Chipmoduls 20 befestigt sein. Über die Spule 30 oder die Spule 22 kann das Chipmodul 20 und somit der Chip 26 von extern kontaktlos mit Energie versorgt werden und/oder Kommunikationssignale empfangen oder aussenden. Zu diesen Zwecken kann, wie in der Fig. 3 veranschaulicht ein externes elektromagnetisches Feld H in die Spule 30 und/oder 22 eingekoppelt werden. Beispielsweise kann der Chip 26 ein Chipkartencontroller in Form eines Mikrocontrollers oder Mikroprozessors mit RFID-Funktionalität sein oder u.a. diesen enthalten.

Zur Meidung von Unklarheiten sei angemerkt, dass in der Fig. 1 das Chipmodul 20 zweimal dargestellt ist: einmal rechts in Einbaulage über der Ausnehmung 16 und links oben davon zur Darstellung der Rückseite um 180 Grad gewendet. Auf der in der Fig. 1 in Einbaulage dargestellten Oberseite des Chipmoduls 20 befindet sich ein Kontaktfeld 21 mit Metallkontakten für eine kontaktbehaftete Kommunikation und Energieversorgung des Chipmoduls 20; daher ist die in der Fig. 1 gezeigte Chipkarte 10 als Dual Interface (DI) Chipkarte neben dem hier interessierenden Kontaktlosmodus auch für einen kontaktbehafteten Betrieb eingerichtet. Es versteht sich, dass die hier vorgeschlagenen Verbesserungen im Wesentlichen gattungsgemäße Chipkarten im Kontaktlosmodus betreffen und die Erfindung auch mit reinen Kontaktloschipkarten funktioniert.

Fig. 2 zeigt ein vereinfachtes funktionales Blockschaltbild der Chipkarte 10 der Fig. 1.

Die integrierte Schaltung des Chips 26 des Chipmoduls 20 umfasst üblicherweise einen Mikroprozessor 40 zum Ausführen von Steuerungsfunktionen für die Chipkarte 10 und für die Kommunikation und ggf. einen (nicht explizit dargestellten) Cryptoprozessor zum Ausführen von Rechenoperationen für Sicherheitsfunktionen. Zudem umfasst die integrierte Schaltung verschiedene Speicherschaltungen zum Ablegen und/ oder Verfügbarmachen von Daten. So gibt es einen RAM-Speicher 44 als Kurzzeitarbeitsspeicher für den Mikroprozessor 40, einen ROM-Speicher 46 für das Betriebssystem des Mikroprozessors 40 sowie einen EEPROM oder EAPROM-Speicher 48 als Anwendungsspeicher für Applikationen der Chipkarte 10.

Eine Drahtlosschnittstelleneinheit 50 ist in der Fig. 3 mit der Spule 30 der Fig. 1 verbunden und umfasst ferner einen Kondensator 52. Die Spule 30 ist mit dem Kondensator 52 der Drahtlosschnittstelleneinheit 50 verschaltet. Die Induktivität der Spule 30 und die Kapazität des Kondensators 52 bilden einen Schwingkreis der für eine bestimmte Trägerfrequenz zur drahtlosen Kommunikation mit dem Chip 26 der Chipkarte 10 als auch der drahtlosen Energieversorgung ausgelegt ist; beispielsweise kann die Trägerfrequenz 13,56 MHz betragen.

Die Drahtlosschnittstelleneinheit 50 umfasst weiter einen Sensor 54, der für die Erfassung einer physikalischen Größe eingerichtet ist, die mit der Feldstärke eines externen elektromagnetischen Felds H, das mit dem Schwingkreis aus Spule 30 und Kondensator 52 koppelt, korreliert. Der von dem Sensor 54 erfasste Feldstärkenwert wird fortlaufend von der Drahtlosschnittstelleneinheit 50 in ein Sensorregister SR des Chips 26 geschrieben; wie an anderer Stelle angemerkt, kann ein Register grundsätzlich eine beschreibbare Speicherstelle sein und damit auch im RAM-Speicher 44 des Chips 26 liegen. Es kann aber auch ein dediziertes Hardware-Register des Mikroprozessors 40 sein. In der Fig. 2 ist das Sensorregister SR lediglich aus Gründen der Übersicht explizit als eine selbstständige Einheit dargestellt.

Die Drahtlosschnittstelleneinheit 50 umfasst weiter eine Spannungseinstelleinheit 56, die für die Einstellung der internen Versorgungsspannung VCC des Chips 26 eingerichtet ist. Im gezeigten Beispiel umfasst die Drahtlosschnittstelleneinheit 50 auch alle Funktionen, um die interne Versorgungsspannung VCC aus dem externen elektromagnetischen Feld H gespeist an den Chip 26 bereitzustellen.

Die Spannungseinstelleinheit 56 ist eingerichtet bei Aktivierung des Chips 26 bei ausreichender Energieversorgung von außen eine vorbestimmte "normale" Versorgungsspannung VCC bereit zu stellen. Die Spannungseinstelleinheit 56 kann über ein Versorgungsspannungsregister VCCR gesteuert werden, indem über das Versorgungsspannungsregister VCCR eine Herabsetzung einer Spannungsschwelle für die interne Versorgungsspannung VCC aktiviert oder deaktiviert wird. Im Ergebnis kann der Chip 26 durch die Herabsetzung der internen Versorgungsspannung VCC bereits in einem schwächeren externen elektromagnetischen Feld H starten und somit schneller eine Betriebsbereitschaft herstellen.

Schließlich verfügt der Chip 26 noch über interne oder externe Shunt-Widerstände, die abhängig von der aktuellen Differenz zwischen der aus dem externen Feld H aufgenommenen Leistung und der vom Chip 26 aktuell umgesetzten Leistung dem Chip 26 zugeschaltet oder von diesem getrennt werden können, um überschüssige Leistung als Wärme abzuführen und so eine Überhitzung und Beschädigung des Chips 26 zu vermeiden. Die Shunt-Widerstände können ebenfalls über ein dediziertes Shunt-Widerstandsregister SR-R gesteuert werden, indem einzelne Bits des Registers das Zu- oder Wegschalten eines zugeordneten Shunt-Widerstands steuern; wie oben im Zusammenhang mit dem Sensorregister SR angemerkt, kann ein Register grundsätzlich eine beschreibbare Speicherstelle sein und damit auch im RAM-Speicher 44 des Chips 26 liegen. Es kann aber auch ein dediziertes Hardware-Register des Mikroprozessors 40 sein. In der Fig. 2 ist das Shunt-Widerstandsregister SR-R lediglich aus Gründen der Übersicht explizit als eine selbstständige Einheit dargestellt.

Fig. 3 veranschaulicht, wie mittels des Schwingkreises als Antenne der Chip 26 mit einem zur Chipkarte 10 externen Lesegerät 60 eines POS-Terminal kommunizieren kann. Eine Steuerschaltung 61 des Lesegeräts 60 ist eingerichtet ebenfalls mittels einer Spule 64 ein elektromagnetisches Feld H aufzubauen und damit Energie in die Spule 30 der Chipkarte 10 einzukoppeln, durch welche die integrierte Schaltung des Chips 26 aktiviert und betrieben wird. Vermittels des externen elektromagnetischen Felds H des Lesegeräts 60 erzeugt die Drahtlosschnittstelleneinheit 50 der Chipkarte 10 die interne Versorgungsspannung VCC für den Chip 26.

Ab einer minimalen elektromagnetischen Feldstärke startet der Mikroprozessor 40 des Chips 26. Mit zunehmender Feldstärke kann die Betriebsfrequenz des Mikroprozessors 40 und somit seine Verarbeitungsgeschwindigkeit steigen. Ab einer bestimmten elektromagnetischen Feldstärke findet keine weitere Steigerung der Betriebsfrequenz mehr statt. Der Mikroprozessor 40 befindet sich dann in Sättigung und arbeitet mit maximaler Frequenz. Wird über die Feldstärke des externen elektromagnetischen Felds H mehr Energie als vom Mikroprozessor 40 umsetzbar eingekoppelt muss diese über zuschaltbare Shunt-Widerstände Rn verbraucht werden, um eine Beschädigung des Chips 26 zu vermeiden.

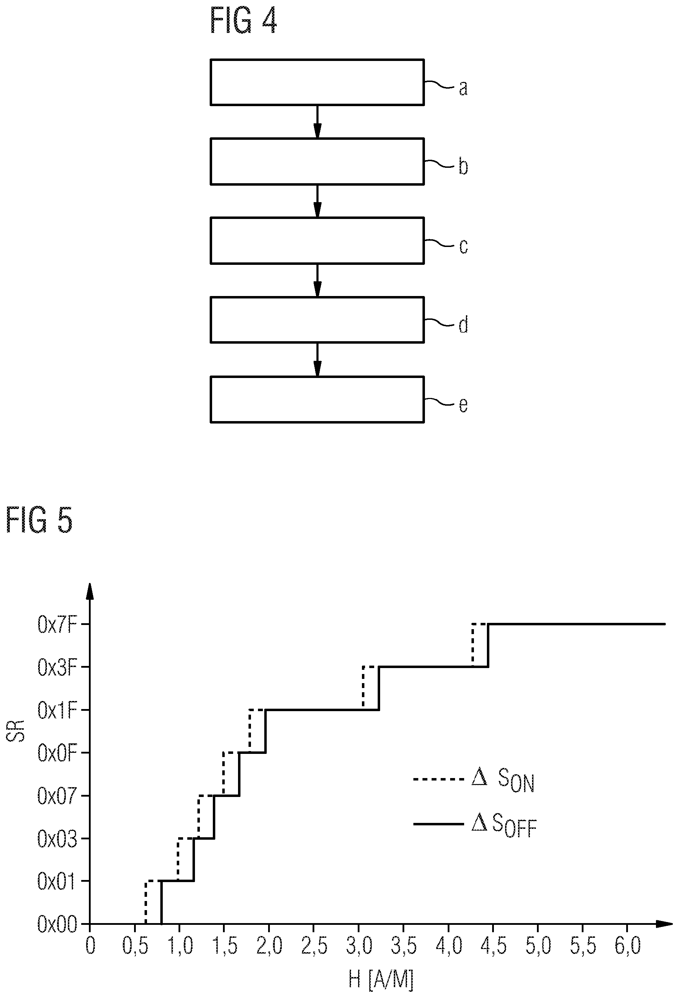

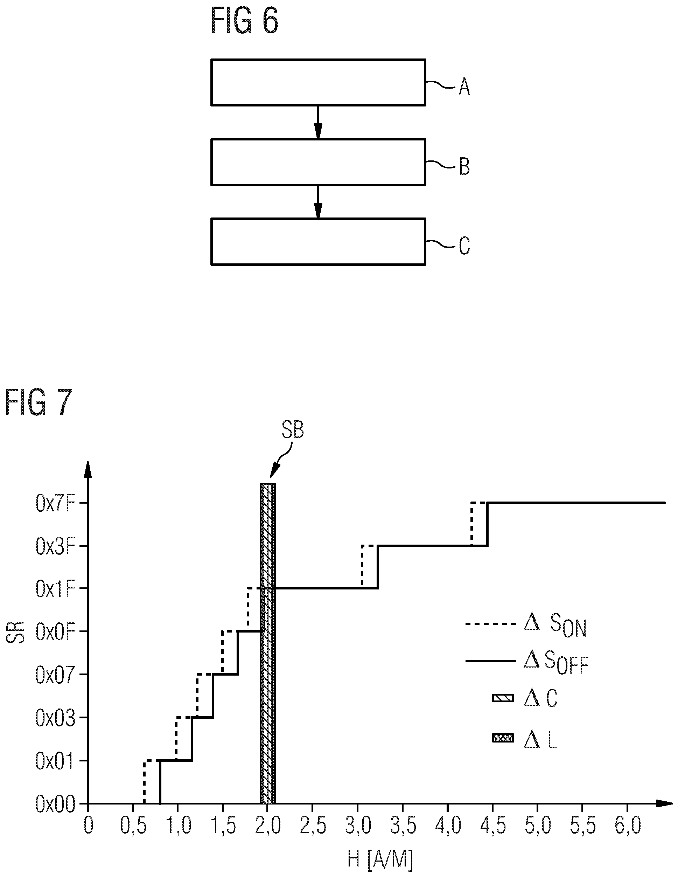

Fig. 4 zeigt ein Flussdiagramm eines erfindungsgemäßen Verfahrens zum Einrichten des Chips einer Chipkarte für die Anwendung des erfindungsgemäßen Software-implementierten Regelungsverfahrens gemäß Fig. 6.

Mit dem im Folgenden erläuterten Verfahren kann beispielsweise der Chip 26 der Chipkarte 10 in den Figuren 1-3 für die Anwendung des erfindungsgemäßen Software-implementierten Regelungsverfahrens zur Stabilisierung der internen Versorgungsspannung des Chips 26 eingesetzt werden, bei dem die interne Versorgungsspannung des Chips 26 basierend auf der Feldstärke eines den Chip 26 mit Energie versorgenden externen elektromagnetischen Felds H durch Aktivieren und Deaktivieren einer Herabsetzung der Schwellenspannung der internen Versorgungsspannung durch entsprechende Beschreibung eines Schwellenwertregisters des Chips 26 reduziert und wieder erhöht werden kann. Der Chip 26 weist dazu das Sensorregister SR auf, das den Feldstärkewert anzeigt, der von der externen Feldstärke des externen elektromagnetischen Felds H und davon, ob die Schwellenspannung gerade aktiviert oder deaktiviert ist, abhängig ist.

Das Einrichtungsverfahren für den Chip 26 weist dazu die folgenden Schritte auf:
In einem ersten Schritt a wird ermittelt, wie sich das Sensorregister SR in Abhängigkeit von der am Ort der Chipkarte 10 vorliegenden Feldstärke verhält. In diesem Schritt ist die Schwellenspannung nicht herabgesetzt. D.h., in dem Schritt a werden Wertepaare zwischen dem Feldstärkewert, der in dem Sensorregister SR angezeigt wird und der tatsächlichen externen Feldstärke ermittelt, wenn die Schwellenspannung deaktiviert ist, somit die interne Versorgungsspannung VCC nicht verringert ist. Die ermittelten Wertepaare können für eine weitere Verwendung in einem Speicherbereich des Chips 26 der Chipkarte 10 abgespeichert werden.

In einem zweiten Schritt b wird der Vorgang wiederholt, allerdings ist nun die Herabsetzung der Schwellenspannung aktiviert.

Vorzugsweise werden diese Messungen in den Schritten a und b in einem Feldbereich von 0,5 A/m bis 7,5 A/m durchgeführt.

In einem Schritt c, wird eine erste Schaltschwelle vorbestimmt, bei deren Unterschreitung die Herabsetzung der Schwellenspannung erstmalig aktiviert werden soll und bei deren nachfolgenden Überschreitung die Herabsetzung der Schwellenspannung erstmalig wieder deaktiviert wird.

In einem Schritt d wird eine zweite Schaltschwelle vorbestimmt, bei deren Unterschreitung die Herabsetzung der Schwellenspannung erneut aktiviert werden soll, wobei die zweite Schaltschwelle niedriger als die erste Schaltschwelle (0x0F) ist.

In einem Schritt e werden die erste Schaltschwelle und die zweite Schaltschwelle in dem Speichermedium des Chips abgespeichert, damit diese Werte für eine zukünftige Verwendung im Betrieb der Chipkarte 10 vorhanden sind.

Fig. 5 zeigt eine beispielhafte Darstellung des mit dem vorstehend erläuterten Verfahren der Fig. 4 ermittelten Zusammenhangs zwischen der externen Feldstärke des externen elektromagnetischen Felds H und der im Sensorregister SR des Chips 26 der Chipkarte 10 angezeigten Werte jeweils für den Fall mit aktivierter Herabsetzung ΔS_{ON} und den Fall mit deaktivierter Herabsetzung ΔS_{OFF} der Schwellenspannung.

Fig. 5 zeigt, dass die Werte des Sensorregisters SR zum einen von der Feldstärke des externen elektromagnetischen Felds H als auch von der eingestellten internen Versorgungsspannung abhängen.

Der Chip 26 startet bei aktiver Herabsetzung ΔS_{ON} der Schwellenspannung bereits früher. Das Sensorregister SR des Chips 26 zeigt bereits bei 0,6 A/m einen externen Feldstärke Wert 0x01 und bei einer externen Feldstärke von 1,0 A/m bereits den Wert 0x03 an. Im Gegensatz dazu, zeigt bei normaler interner Versorgungsspannung, d.h. bei deaktivierter Herabsetzung ΔS_{OFF} der Schwellenspannung, das Sensorregister erst bei 1,3 A/m den Wert 0x03 an.

Anhand der Fig. 5 ist zu erkennen, dass bei einem Deaktivieren der Herabsetzung der Schwellenspannung ΔS_{OFF} das Sensorregister SR einen niedrigeren Wert anzeigt. Um den Chip 26 nicht intern durch die heruntergesetzte Schwellenspannung der internen Versorgungsspannung VCC zu überhitzen, muss die Deaktivierung der Herabsetzung der Schwellenspannung z.B. spätestens bei 2 A/m erfolgen.

Fig. 6 zeigt ein Flussdiagramm eines erfindungsgemäßen Verfahrens zum Einstellen der internen Versorgungsspannung des Chips einer Chipkarte basierend auf der Feldstärke eines den Chip mit Energie versorgenden externen elektromagnetischen Felds zur Umsetzung des erfindungsgemäßen Software-implementierten Regelungsverfahrens.

Das Verfahren der Fig. 6 wird von dem Chip 26 der Chipkarte 10 implementiert und dient dem Einstellen der internen Versorgungsspannung VCC des Chips 26 basierend auf der Feldstärke des den Chip 26 mit Energie versorgenden externen elektromagnetischen Felds H. Die interne Versorgungsspannung VCC kann durch Aktivieren und Deaktivieren einer Herabsetzung einer Schwellenspannung verringert werden. Wie beispielsweise in der Fig. 2 gezeigt, weist der Chip 26 das Sensorregister SR auf, das einen Feldstärkewert anzeigt, der von der aktuellen externen Feldstärke und der aktuell eingestellten internen Versorgungsspannung VCC abhängt.

Das Verfahren selbst weist die folgenden Schritte auf:
In einem Schritt A wird die Herabsetzung der Schwellenspannung erstmalig aktiviert, sobald der Feldstärkewert, der im Sensorregister SR angezeigt wird, kleiner als die vorbestimmte erste Schaltschwelle - im Bespiel: 0x1F - ist.
In einem Schritt B wird die Herabsetzung der Schwellenspannung erstmalig deaktiviert, sobald der Feldstärkewert, der im Sensorregister SR angezeigt wird, größer gleich der ersten Schaltschwelle - im Beispiel: 0x1F - ist.
In einem Schritt C wird eine vorbestimmte zweite Schaltschwelle - im Beispiel: 0x07 - für jedes erneute Aktivieren der Herabsetzung der Schwellenspannung eingestellt, wobei die erste Schaltschwelle - im Beispiel: 0x1F - für jedes erneute Deaktivieren der Herabsetzung der Schwellenspannung beibehalten wird. Die zweite Schaltschwelle - im Beispiel: 0x07 - ist niedriger als die erste Schaltschwelle - im Beispiel: 0x1F.

Fig. 7 veranschaulicht die Überlegungen, die hinter dem erfindungsgemäßen Software-implementierten Regelungsverfahren für die Aktivierung und Deaktivierung der Herabsetzung der Schwellenspannung anhand der Zusammenhänge zwischen der im Sensorregister angezeigten Feldstärke jeweils bei aktivierter Herabsetzung und deaktivierter Herabsetzung der Schwellenspannung stehen.

In der Fig. 7 ist ein Schaltbereich SB bei 2 A/m markiert. Es wurde festgestellt, dass Schwankungen ΔC im Produktionsprozess des Chips 26 eine Verschiebung des Werts im Sensorregister SR in einem Bereich von +/- 0, 1 A/m verursachen. Zu diesen Bereich kommen noch die Schwankungen ΔL, die durch die Spule 30 oder 22 als auch durch die verwendete Verbindungstechnologie kommen. Bei einer gelöteten Verbindungstechnologie sind die Schwankungswerte sehr klein, bei z.B. der Flexbump- oder Flexible Bump-Technologie wurden höhere Werte von +/- 0,4 A/m festgestellt.

Fig. 7 zeigt, dass das Sensorregister SR bei der Beispiel-Chipkarte 10 in einem Feldstärkenbereich von 1,8 A/m bis 2,2 A/m den Wert 0x1F annehmen kann, bei deaktivierter Herabsetzung der Schwellenspannung ΔS_{OFF}. Dieses Verhalten gibt es im selben Maße, wenn die Herabsetzung der Schwellenspannung aktiviert ΔS_{ON} ist. Dieser Bereich kann nicht als "Varianz" angesehen werden.

Die erste Schaltschwelle wurde hier beim Sensorregisterwert 0x1F vorbestimmt. Zeigt das Sensorregister SR einen Wert kleiner als 0x1F an, wird die Herabsetzung der Schwellenspannung aktiviert, bei >= 0x1F sollte die Herabsetzung der Schwellenspannung wieder deaktiviert werden.

Fig. 7 zeigt nun aber, dass der Sensorregisterwert auf 0x0F fällt, wenn die Herabsetzung der Schwellenspannung deaktiviert ΔS_{OFF} ist, was sofort wieder zu einer Aktivierung ΔS_{ON} der Herabsetzung der Schwellenspannung führen könnte. Daher schlagen die Erfinder vor, für eine erneute Deaktivierung ΔS_{OFF} der Herabsetzung der Schwellenspannung die Schaltschwelle für die Aktivierung der Herabsetzung der Schwellenspannung zu erniedrigen, um eine instabile Regelung durch Hin- und Herspringen (Togglen) zu vermeiden. Beispielsweise kann in dem dargestellten Beispielsszenario der Fig. 7 die zweite Schaltschwelle für das erneute Aktivieren ΔS_{ON} der Herabsetzung der Schwellenspannung auf 0x07gesetzt werden.

Im Ergebnis kann mit dem vorstehend beschriebenen Verfahren eine gattungsgemäße Chipkarte verbessert werden, da mit der Software-implementierten Regelung der Herabsetzung der Schwellenspannung der internen Versorgungsspannung VCC eine verbesserte Stabilität der Energieversorgung des Chips 26 der Chipkarte 10 sichergestellt werden kann. Der Chip 26 wird dadurch im Einsatz z.B. an einem POS-Terminal weniger bis gar nicht mehr intern "abgewürgt" und die Gefahr einer Beschädigung durch Überhitzung des Chips 26 verringert. Insgesamt ist die Wahrscheinlichkeit dafür verbessert, dass bei schwankender externer Feldstärke eine komplette Transaktion mit der Chipkarte 10 mit dem erfindungsgemäßen Chip 26 an einem POS-Terminal 60 durchgeführt werden kann.

## Patentansprüche

1. Verfahren, das von einem Chip (26) einer Chipkarte (10) implementiert wird, zum Einstellen der internen Versorgungsspannung (VCC) des Chips (26) basierend auf der Feldstärke eines den Chip (26) mit Energie versorgenden externen elektromagnetischen Felds (H), wobei die interne Versorgungsspannung (VCC) durch Aktivieren und Deaktivieren einer Herabsetzung einer Schwellenspannung verringerbar und erhöhbar ist, **dadurch gekennzeichnet, dass** der Chip (26) ein Sensorregister (SR) aufweist, das einen Feldstärkewert anzeigt, der abhängig von der externen Feldstärke und der eingestellten internen Versorgungsspannung (VCC) ist, wobei das Verfahren die folgenden Schritte aufweist:
- einen Schritt A, mit erstmaligem Aktivieren der Herabsetzung der Schwellenspannung, wenn der Feldstärkewert im Sensorregister (SR) kleiner als eine vorbestimmte erste Schaltschwelle (0x1F) ist;
- einen Schritt B, mit erstmaligem Deaktivieren der Herabsetzung der Schwellenspannung, sobald der Feldstärkewert im Sensorregister (SR) größer gleich der ersten Schaltschwelle (0x1F) ist; und
- einen Schritt C, mit Setzen einer vorbestimmten zweiten Schaltschwelle (0x07) für jedes erneute Aktivieren der Herabsetzung der Schwellenspannung unter Beibehaltung der ersten Schaltschwelle (0x1F) für jedes erneute Deaktivieren der Herabsetzung der Schwellenspannung, wobei die zweite Schaltschwelle (0x07) niedriger als die erste Schaltschwelle (0x1F) ist.

2. Verfahren nach Anspruch 1, **dadurch gekennzeichnet, dass** von dem Sensorregister (SR) angezeigte Feldstärkewert intermittierend, bevorzugt in einem zeitlichen Abstand von 30 bis 40 ms, besonders bevorzugt etwa alle 35 ms, ausgewertet wird, und darauf basierend die Schritte A bis C ausgeführt werden.

3. Verfahren nach Anspruch 1 oder 2, **dadurch gekennzeichnet, dass** der Befehl "Frame Wait Time Extension Request", S(WTX)-Request, des T=CL Protokolls gemäß ISO/IEC 7816-4 als Trigger für eine kontinuierliche Auswertung des Sensorregisters (SR) verwendet wird.

4. Verfahren nach Anspruch 3, **dadurch gekennzeichnet, dass** das Auswerten des Sensorregisters (SR) vor dem Aussenden des S(WTX)-Request erfolgt.

5. Verfahren nach einem der Ansprüche 1 bis 4, **dadurch gekennzeichnet, dass** der Chip (26) ferner Shunt-Widerstände (R) und ein Shunt-Register (RR) zur Ansteuerung der Shunt-Widerstände (R) aufweist, die abhängig von der aktuellen Leistungsaufnahme des Chips (26), der externen Feldstärke und der aktuellen internen Versorgungsspannung (VCC) zur Abfuhr überschüssiger Energie zum Chip (26) zugeschaltet oder vom Chip (26) getrennt werden.

6. Computerprogramm, umfassend Befehle, die bei der Ausführung des Computerprogramms durch einen Computer, einen Mikrocontroller (40) in einem Chip (26) einer Chipkarte (10), diesen veranlassen, die Schritte des Verfahrens nach einem der Ansprüche 1-5 auszuführen.

7. Speichermedium, in Form eines internen oder externen Programmspeicherbereichs eines Chips (26) einer Chipkarte (10), umfassend Befehle, die bei der Ausführung durch einen Computer, einen Mikrocontroller (40) in einem Chip (26) einer Chipkarte (10), diesen veranlassen, die Schritte des Verfahrens nach einem der Ansprüche 1-5 auszuführen.

8. Verfahren zum Einrichten des Chips (26) einer Chipkarte (10) mit einem Speichermedium gemäß Anspruch 7, wobei die interne Versorgungsspannung (VCC) des Chips (26) basierend auf der Feldstärke eines den Chip (26) mit Energie versorgenden externen elektromagnetischen Felds (H) durch Aktivieren und Deaktivieren einer Herabsetzung einer Schwellenspannung verringert und erhöht werden kann, und der Chip (26) ein Sensorregister (SR) aufweist, das einen Feldstärkewert anzeigt, der abhängig ist von der externen Feldstärke und davon, ob die Herabsetzung der Schwellenspannung aktiviert oder deaktiviert ist, wobei das Verfahren die folgenden Schritte aufweist:
- einen Schritt a, mit Bestimmen der Feldstärkewerte in dem Sensorregister (SR) in Abhängigkeit von der externen Feldstärke, wenn die Herabsetzung der Schwellenspannung deaktiviert ist, somit die interne Versorgungsspannung (VCC) nicht verringert ist, über einen Feldstärkenbereich;
- einen Schritt b, mit Bestimmen der Feldstärkewerte in dem Sensorregister (SR) in Abhängigkeit von der externen Feldstärke, wenn die Herabsetzung der Schwellenspannung aktiviert ist, somit die interne Versorgungsspannung (VCC) verringert ist, über den Feldstärkenbereich;
- einen Schritt c, mit Vorbestimmen einer ersten Schaltschwelle (0x0F), bei deren Unterschreitung die Herabsetzung der Schwellenspannung erstmalig aktiviert wird und bei deren nachfolgenden Überschreitung die Herabsetzung der Schwellenspannung erstmalig wieder deaktiviert wird;
- einen Schritt d, mit Vorbestimmen einer zweiten Schaltschwelle (0x07), bei deren Unterschreitung die Herabsetzung der Schwellenspannung erneut aktiviert werden soll, wobei die zweite Schaltschwelle (0x07) niedriger als die erste Schaltschwelle (0x0F) ist; und
- einen Schritt e, mit Abspeichern der ersten Schaltschwelle (0x0F) und der zweiten Schaltschwelle (0x07) in dem Speichermedium des Chips (26).

9. Verfahren nach Anspruch 8, **dadurch gekennzeichnet, dass** der Feldstärkenbereich von 0 A/m bis 10 A/m und bevorzugt von 0,5 A/m bis 7,5 A/m definiert ist.

10. Verfahren nach Anspruch 8 oder 9, **dadurch gekennzeichnet, dass** in dem Schritt d Schwankungen aufgrund des Produktionsprozesses der Chipkarte (10) und/oder einer Spule (30, 22), die mit dem Chip (26) verschaltet ist, und/oder aufgrund der Verbindungstechnologie, mit der die Spule (30, 22) mit dem Chip (26) verschaltet ist, berücksichtigt werden.

11. Chipkarte (10) mit einem Chip (26) dessen interne Versorgungsspannung (VCC) durch Aktivieren und Deaktivieren einer Herabsetzung einer Schwellenspannung verringerbar ist, wobei der Chip (26) aufweist:
- ein Sensorregister (SR), das einen Feldstärkewert anzeigt, der abhängig von einer externen Feldstärke eines externen elektromagnetischen Felds (H) und der eingestellten internen Versorgungsspannung (VCC) ist;
- ein Speichermedium, indem eine erste Schaltschwelle (0x0F) und eine zweite Schaltschwelle (0x07) abgespeichert sind, wobei die zweite Schaltschwelle (0x07) niedriger als die erste Schaltschwelle (0x0F) ist; und
- eine integrierte Schaltung (14), die eingerichtet ist, ein Verfahren nach einem der Ansprüche 1 bis 5 auszuführen.

12. Chipkarte (10) nach Anspruch 11, **dadurch gekennzeichnet, dass** die Chipkarte (10) in dem Speichermedium einen Speicherbereich aufweist, in dem Wertepaare aufweisend in dem Sensorregister (SR) anzuzeigende Feldstärkewerte und die jeweils zugehörige externe Feldstärke, wenn die Herabsetzung der Schwellenspannung deaktiviert ist, somit die interne Versorgungsspannung (VCC) nicht verringert ist, und in dem Wertepaare aufweisend in dem Sensorregister (SR) anzuzeigende Feldstärkewerte und die jeweils zugehörige externen Feldstärke, wenn die Herabsetzung der Schwellenspannung aktiviert ist, somit die interne Versorgungsspannung (VCC) verringert ist, abgespeichert sind.

13. Chipkarte (10) nach Anspruch 11 oder 12, **dadurch gekennzeichnet, dass** die jeweiligen Wertepaare bei aktivierter Herabsetzung der Schwellenspannung und bei deaktivierter Herabsetzung der Schwellenspannung aufweisend den Feldstärkewert in dem Sensorregister (SR) und die zugehörige externe Feldstärke über einen Feldstärkenbereich von 0,5 A/m bis 7,5 A/m in dem Speicherbereich gespeichert sind.

## Claims

1. A method implemented by a chip (26) of a smart card (10) for adjusting the internal supply voltage (VCC) of the chip (26) based on the field strength of an external electromagnetic field (H) supplying power to the chip (26), wherein the internal supply voltage (VCC) can be decreased and increased by activating and deactivating a reduction of a threshold voltage, **characterized in that** the chip (26) comprises a sensor register (SR) that indicates a field strength value dependent on the external field strength and the set internal supply voltage (VCC), wherein the method comprises the following steps:
- a step A, comprising initially activating the threshold voltage reduction when the field strength value in the sensor register (SR) is less than a predetermined first switching threshold (Ox1F);
- a step B comprising deactivating the threshold voltage reduction for the first time as soon as the field strength value in the sensor register (SR) is greater than or equal to the first switching threshold (Ox1F); and
- a step C, comprising setting a predetermined second switching threshold (0x07) for each subsequent activation of the threshold voltage reduction while maintaining the first switching threshold (Ox1F) for each subsequent deactivation of the threshold voltage reduction, wherein the second switching threshold (0x07) is lower than the first switching threshold (Ox1F).

2. The method according to claim 1, **characterized in that** the field strength value indicated by the sensor register (SR) is evaluated intermittently, preferably at intervals of 30 to 40 ms, more preferably approximately every 35 ms, and steps A through C are performed based thereon.

3. A method according to claim 1 or 2, **characterized in that** the "Frame Wait Time Extension Request" (S(WTX) request) of the T=CL protocol according to ISO/IEC 7816-4 is used as a trigger for continuous evaluation of the sensor register (SR).

4. A method according to claim 3, **characterized in that** the evaluation of the sensor register (SR) takes place before the S(WTX) request is transmitted.

5. A method according to any one of claims 1 to 4, **characterized in that** the chip (26) further comprises shunt resistors (R) and a shunt register (RR) for controlling the shunt resistors (R), which are connected to or disconnected from the chip (26) depending on the current power consumption of the chip (26), the external field strength, and the current internal supply voltage (VCC) to dissipate excess energy to the chip (26) or to be disconnected from the chip (26).

6. A computer program comprising instructions which, when the computer program is executed by a computer, cause a microcontroller (40) in a chip (26) of a chip card (10) to perform the steps of the method according to any one of claims 1-5.

7. A storage medium, in the form of an internal or external program memory area of a chip (26) of a smart card (10), comprising instructions which, when executed by a computer or a microcontroller (40) in a chip (26) of a smart card (10), cause the microcontroller to perform the steps of the method according to one of claims 1-5.

8. A method for configuring the chip (26) of a smart card (10) with a storage medium according to claim 7, wherein the internal supply voltage (VCC) of the chip (26) of the chip card () can be reduced and increased based on the field strength of an external electromagnetic field (H) supplying power to the chip (26) by activating and deactivating a threshold voltage reduction, and the chip (26) comprises a sensor register (SR) that indicates a field strength value dependent on the external field strength and on whether the threshold voltage reduction is enabled or disabled, wherein the method comprises the following steps:
- a step a, comprising determining the field strength values in the sensor register (SR) as a function of the external field strength when the threshold voltage reduction is deactivated, such that the internal supply voltage (VCC) is not reduced, over a field strength range;
- a step b, comprising determining the field strength values in the sensor register (SR) as a function of the external field strength, when the threshold voltage reduction is enabled, such that the internal supply voltage (VCC) is reduced, over the field strength range;
- a step c, involving the presetting of a first switching threshold (0x0F), below which the reduction of the threshold voltage is activated for the first time, and above which the reduction of the threshold voltage is deactivated for the first time;
- a step d, comprising predetermining a second switching threshold (0x07), below which the reduction of the threshold voltage is to be reactivated, wherein the second switching threshold (0x07) is lower than the first switching threshold (0x0F); and
- a step e, comprising storing the first switching threshold (0x0F) and the second switching threshold (0x07) in the storage medium of the chip (26).

9. A method according to claim 8, **characterized in that** the field strength range is defined as from 0 A/m to 10 A/m and preferably from 0.5 A/m to 7.5 A/m.

10. A method according to claim 8 or 9, **characterized in that**, in step d, variations due to the production process of the chip card (10) and/or a coil (30, 22) connected to the chip (26), and/or due to the connection technology used to connect the coil (30, 22) to the chip (26), are taken into account.

11. A smart card (10) comprising a chip (26) whose internal supply voltage (VCC) can be reduced by activating and deactivating a threshold voltage reduction, wherein the chip (26) comprises:
- a sensor register (SR) that indicates a field strength value dependent on an external field strength of an external electromagnetic field (H) and the set internal supply voltage (VCC);
- a storage medium in which a first switching threshold (0x0F) and a second switching threshold (0x07) are stored, wherein the second switching threshold (0x07) is lower than the first switching threshold (0x0F); and
- an integrated circuit (14) configured to perform a method according to any one of claims 1 through 5.

12. A smart card (10) according to claim 11, **characterized in that** the smart card (10) comprises, in the storage medium, a storage area in which value pairs comprising field strength values to be displayed in the sensor register (SR) and the respective corresponding external field strength, when the reduction of the threshold voltage is deactivated, and thus the internal supply voltage (VCC) is not reduced, and in which value pairs comprising field strength values to be displayed in the sensor register (SR) and the respective associated external field strength when the threshold voltage reduction is activated, and thus the internal supply voltage (VCC) is reduced, are stored.

13. A smart card (10) according to claim 11 or 12, **characterized in that** the respective pairs of values, comprising the field strength value in the sensor register (SR) and the associated external field strength, are stored in the memory area over a field strength range from 0.5 A/m to 7.5 A/m, both when the threshold voltage reduction is activated and when it is deactivated.

## Revendications

1. Procédé mis en œuvre par une puce (26) d'une carte à puce (10) pour régler la tension d'alimentation interne (VCC) de la puce (26) en fonction de l'intensité d'un champ électromagnétique externe (H) alimentant la puce (26) en énergie, la tension d'alimentation interne (VCC) pouvant être réduite et augmentée en activant et désactivant une réduction d'une tension de seuil, **caractérisé en ce que** la puce (26) comporte un registre de capteur (SR) qui indique une valeur d'intensité de champ dépendant de l'intensité du champ externe et de la tension d'alimentation interne (VCC) réglée, le procédé comprenant les étapes suivantes :
- une étape A, comprenant l'activation initiale de la réduction de la tension de seuil lorsque la valeur d'intensité de champ dans le registre de capteur (SR) est inférieure à un premier seuil de commutation prédéterminé (Ox1F) ;
- une étape B consistant à désactiver pour la première fois la réduction de la tension de seuil dès que la valeur d'intensité de champ dans le registre de capteur (SR) est supérieure ou égale au premier seuil de commutation (0x1F) ; et
- une étape C, comprenant la définition d'un deuxième seuil de commutation prédéterminé (0x07) pour chaque nouvelle activation de la réduction de la tension de seuil tout en conservant le premier seuil de commutation (0x1F) pour chaque nouvelle désactivation de la réduction de la tension de seuil, le deuxième seuil de commutation (0x07) étant inférieur au premier seuil de commutation (Ox1F).

2. Procédé selon la revendication 1, **caractérisé en ce que** la valeur d'intensité de champ indiquée par le registre de capteur (SR) est évaluée de manière intermittente, de préférence à un intervalle de temps de 30 à 40 ms, de manière particulièrement préférée environ toutes les 35 ms, et **en ce que** les étapes A à C sont exécutées sur cette base.

3. Procédé selon la revendication 1 ou 2, **caractérisé en ce que** la commande « Frame Wait Time Extension Request », requête S(WTX), du protocole T=CL selon la norme ISO/IEC 7816-4 est utilisée comme déclencheur pour une évaluation continue du registre de capteur (SR).

4. Procédé selon la revendication 3, **caractérisé en ce que** l'évaluation du registre de capteur (SR) a lieu avant l'émission de la requête S(WTX).

5. Procédé selon l'une des revendications 1 à 4, **caractérisé en ce que** la puce (26) comporte en outre des résistances shunt (R) et un registre shunt (RR) pour la commande des résistances shunt (R), qui, en fonction de la consommation de puissance actuelle de la puce (26), de l'intensité de champ externe et de la tension d'alimentation interne actuelle (VCC), sont connectées à la puce (26) ou déconnectées de celle-ci afin d'évacuer l'énergie excédentaire.

6. Programme informatique comprenant des instructions qui, lors de l'exécution du programme informatique par un ordinateur, amènent un microcontrôleur (40) dans une puce (26) d'une carte à puce (10) à exécuter les étapes du procédé selon l'une des revendications 1 à 5.

7. Support de stockage, sous la forme d'une zone de mémoire de programme interne ou externe d'une puce (26) d'une carte à puce (10), comprenant des instructions qui, lorsqu'elles sont exécutées par un ordinateur ou un microcontrôleur (40) dans une puce (26) d'une carte à puce (10), amènent celui-ci à exécuter les étapes du procédé selon l'une des revendications 1 à 5.

8. Procédé de configuration de la puce (26) d'une carte à puce (10) avec un support de stockage selon la revendication 7, dans lequel la tension d'alimentation interne (VCC) de la puce (26) d' e pouvant être réduite et augmentée en fonction de l'intensité de champ d'un champ électromagnétique externe (H) alimentant la puce (26) en énergie, par l'activation et la désactivation d'une réduction d'une tension de seuil, et la puce (26) comportant un registre de capteur (SR) indiquant une valeur d'intensité de champ qui dépend de l'intensité du champ externe et du fait que la réduction de la tension de seuil est activée ou désactivée, le procédé comprenant les étapes suivantes :
- une étape a consistant à déterminer les valeurs d'intensité de champ dans le registre de capteur (SR) en fonction de l'intensité du champ externe, lorsque la réduction de la tension de seuil est désactivée, de sorte que la tension d'alimentation interne (VCC) n'est pas réduite, sur une plage d'intensités de champ ;
- une étape b, consistant à déterminer les valeurs d'intensité de champ dans le registre de capteur (SR) en fonction de l'intensité de champ externe, lorsque la réduction de la tension de seuil est activée, de sorte que la tension d'alimentation interne (VCC) est réduite, sur la plage d'intensités de champ ;
- une étape c, consistant à prédéfinir un premier seuil de commutation (0x0F) ; lorsque la tension descend en dessous de ce seuil, la réduction de la tension de seuil est activée pour la première fois, et lorsqu'elle le dépasse par la suite, la réduction de la tension de seuil est désactivée pour la première fois ;
- une étape d, comprenant la prédéfinition d'un deuxième seuil de commutation (0x07), en dessous duquel la réduction de la tension de seuil doit être réactivée, le deuxième seuil de commutation (0x07) étant inférieur au premier seuil de commutation (0x0F) ; et
- une étape e, comprenant l'enregistrement du premier seuil de commutation (0x0F) et du deuxième seuil de commutation (0x07) dans le support de stockage de la puce (26).

9. Procédé selon la revendication 8, **caractérisé en ce que** la plage d'intensité de champ est définie de 0 A/m à 10 A/m et de préférence de 0,5 A/m à 7,5 A/m.

10. Procédé selon la revendication 8 ou 9, **caractérisé en ce que**, à l'étape d, il est tenu compte des variations dues au processus de fabrication de la carte à puce (10) et/ou d'une bobine (30, 22) connectée à la puce (26), et/ou dues à la technologie de connexion utilisée pour connecter la bobine (30, 22) à la puce (26).

11. Carte à puce (10) comportant une puce (26) dont la tension d'alimentation interne (VCC) peut être réduite en activant et en désactivant une réduction d'une tension de seuil, la puce (26) comportant :
- un registre de capteur (SR) qui indique une valeur d'intensité de champ qui dépend d'une intensité de champ externe d'un champ électromagnétique externe (H) et de la tension d'alimentation interne (VCC) réglée ;
- un support de stockage dans lequel sont enregistrés un premier seuil de commutation (0x0F) et un deuxième seuil de commutation (0x07), le deuxième seuil de commutation (0x07) étant inférieur au premier seuil de commutation (0x0F) ; et
- un circuit intégré (14) agencé pour exécuter un procédé selon l'une des revendications 1 à 5.

12. Carte à puce (10) selon la revendication 11, **caractérisée en ce que** la carte à puce (10) comporte, dans le support de stockage, une zone de mémoire dans laquelle sont stockées des paires de valeurs comprenant des valeurs d'intensité de champ à afficher dans le registre de capteur (SR) et l'intensité de champ externe correspondante respective lorsque la réduction de la tension de seuil est désactivée, et donc la tension d'alimentation interne (VCC) n'est pas réduite, et dans laquelle sont enregistrées des paires de valeurs comprenant des valeurs d'intensité de champ à afficher dans le registre de capteur (SR) et l'intensité de champ externe correspondante respective lorsque la réduction de la tension de seuil est activée, et donc la tension d'alimentation interne (VCC) est réduite.

13. Carte à puce (10) selon la revendication 11 ou 12, **caractérisée en ce que** les paires de valeurs respectives, comprenant la valeur d'intensité de champ dans le registre de capteur (SR) et l'intensité de champ externe correspondante sur une plage d'intensité de champ de 0,5 A/m à 7,5 A/m, sont stockées dans la zone de mémoire lorsque la réduction de la tension de seuil est activée et lorsque la réduction de la tension de seuil est désactivée.
